# EUROPEAN PATENT APPLICATION

(11) **EP 4 403 307 A1**
(43) Date of publication of application: **24.07.2024**
(21) Application number: 23172018.6
(22) Date of filing: 08.05.2023
(51) Int. Cl.: B25B 1/02, B25B 1/24

(54) **MODULAR MACHINE TOOL PROCESSING JIG**

(30) Priority: 19.01.2023 TW 112102500
(71) Applicant: Will Excellence Smart Manufacturing CO., LTD., Taichung City 437 (TW)
(72) Inventor: TSAI, Yi-Cheng, 437 Taichung City (TW)
(74) Representative: Viering, Jentschura & Partner mbB Patent- und Rechtsanwälte

(57) **Abstract**

A modular machine tool processing jig includes a base body (10) having at least a positioning device (11) and a movement adjusting device (12); at least a clamping positioning seat (20) fixed on the base body (10) through the positioning device (11) and having at least a positioning clamping face (21), by which providing an efficient and accurate positioning effect; and at least a clamping adjusting seat (30) disposed on the base body (10) through the movement adjusting device (12), so as to adjust the interval between the clamping adjusting seat (30) and the clamping positioning seat (20) along an axial direction for different workpiece sizes. Therein, the clamping adjusting seat (30) has at least a clamping assembly (31) having at least a clamping face (32). The clamping assembly (31) adjusts the interval between the clamping face (32) and the positioning clamping face (21) for clamping a to-be-processed workpiece (90).

## Description

### BACKGROUND OF THE INVENTION

### 1. Field of the Invention:

The present invention relates to machine tool processing jigs, and more particularly, to a jig applicable to differently sized to-be-processed workpieces and having multiple modular combinations for various processing conditions.

### 2. Description of the Related Art:

During the processing of general machine tools, in order to stably fix differently shaped workpieces on the machine tool, a specific processing jig is usually designed for a certain shape of to-be-processed workpiece. Such jig is able to firmly fix the workpiece on the machine tool to prevent the workpiece from accidentally falling off during the processing. Also, the workpieces are allowed to be arranged on multiple sets of processing jigs in advance, and the processing jigs are then placed on/retrieved from the machine tool manually or through a mechanical arm, thereby reducing the workpiece loading and unloading time.

However, since the processing jigs are usually designed for specific to-be-processed workpieces, the processing jigs of different workpieces are unable to be universally shared. Therefore, when the target product of the production line is changed, most of the processing jigs have to be redesigned and manufactured, and those unable to be recycled and reused have to be discarded, resulting in an increase in production cost and waste of resource.

Furthermore, when a general to-be-processed workpiece is placed on the processing jig, there is a lack of effective positioning means and devices. Even if the to-be-processed workpiece is able to be fixed on an approximate position on the machine tool through the processing jig, a zero-setting correction and a tool calibration are still needed, so as to achieve an effective and accurate processing operation, which is critical to the precision processing of workpieces.

### SUMMARY OF THE INVENTION

To improve the issues above, the present invention discloses a modular machine tool processing jig. With the clamping adjusting seat effectively adjusting the interval with respect to the clamping positioning seat, the present invention is applicable to differently sized to-be-processed workpieces. Also, the clamping assembly adjusts the interval between the clamping face and the positioning clamping face, so as to provide a stable clamping force for clamping a to-be-processed workpiece. Further, the positioning clamping face is able to be a reference face for subsequent process, thereby achieving a effective and accurate positioning effect.

For achieving the aforementioned objectives, a modular machine tool jig in accordance with an embodiment of the present invention is provided, comprising:
a base body comprising at least a positioning device and a movement adjusting device disposed thereon;
at least a clamping positioning seat fixed on the base body through the positioning device, the clamping positioning seat comprising at least a positioning clamping face disposed thereon; and
at least a clamping adjusting seat disposed on the base body through the movement adjusting device, the movement adjusting device adjusting an interval between the clamping adjusting seat and the clamping positioning seat along an axial direction; wherein the clamping adjusting seat comprises at least a clamping assembly disposed thereon, the clamping assembly comprises at least a clamping face, and the clamping assembly adjusts an interval between the clamping face and the positioning clamping face, so as to clamp a to-be-processed workpiece.

Preferably, the movement adjusting device comprises an adjusting groove disposed on the base body. The adjusting groove comprises an opening. The width of the opening is smaller than the width of the adjusting groove.

Preferably, the adjusting groove has a sectional face formed in at least one of reversed T shape, dovetail groove, and trapezoid shape.

Preferably, the base body further comprises a reinforcement plate covering a surface of the base body, and the opening is disposed on the reinforcement plate and arranged above the adjusting groove.

Preferably, the positioning device comprises a plurality of positioning bores preformed on the surface of the base body, and at least a positioning pin disposed on the bottom of the clamping positioning seat.

Preferably, the positioning device comprises at least a fastening block disposed in the adjusting groove, and the clamping positioning seat and the fastening block are fastened through a fastening screw member.

Preferably, the clamping adjusting seat comprises at least an adjusting slide block disposed in the adjusting groove and fastened with the clamping adjusting seat through an adjusting screw member, such that the clamping adjusting seat is allowed to axially slide or be fixed along the adjusting groove.

Preferably, the clamping face comprises a first clamping face and a second clamping face disposed on two lateral sides of the clamping assembly, respectively. The first clamping face comprises a plurality of grooves on the surface thereof. The clamping assembly is selectively switchable for the first clamping face or the second clamping face to face the positioning clamping face.

Preferably, the clamping assembly comprises a first clamping block having the first clamping face on one side and a first slope on another side; a second clamping block having the second clamping face on one side and a second slope on another side; an adjusting member disposed between the first clamping block and the second clamping block and having two adjusting slopes arranged corresponding to the first slope and the second slope; an elastic member disposed between the first clamping block and the second clamping block, and elastically forcing the first clamping block and the second clamping block to abut against each other in general; and a clamping screw member passing through the adjusting member and having one end fastened to the clamping adjusting seat.

Preferably, the clamping positioning seat further comprises a rough process positioning member movably fastened on the clamping positioning seat, with the positioning clamping face disposed on a lateral side of the rough process positioning member. Also, the rough process positioning member comprises at least a jaw member having at least one portion protruding on a surface of the positioning clamping face.

Preferably, the grooves of the first clamping face comprise at least a horizontal groove and a vertical groove.

Preferably, the clamping positioning seat further comprises a fine process positioning member movably fastened on the clamping positioning seat, with the positioning clamping face disposed on a lateral side of the fine process positioning member.

Preferably, the clamping adjusting seat further comprises a fine process clamping member movably installed on the second clamping face.

Preferably, the clamping positioning seat further comprises a shaped positioning member movably fastened on the clamping positioning seat, with the positioning clamping face disposed on a lateral side of the shaped positioning member. The shape of the positioning clamping face of the shaped positioning member is allowed to be formed according to an outer profile of the to-be-processed workpiece.

Preferably, the clamping adjusting seat further comprises a shaped clamping member movably installed on the second clamping face, and the shaped clamping member comprises a shaped clamping face. The shape of the shaped clamping face is allowed to be formed according to the outer profile of the to-be-processed workpiece.

Preferably, the base body comprises a zero-point positioning device. The zero-point positioning device is allowed to be at least a pin bore or at least a pin on the bottom of the base body.

### BRIEF DESCRIPTION OF THE DRAWINGS

**Fig. 1** is a perspective view of the combination structure in accordance with an embodiment of the present invention.
**Fig. 2** is a partially sectional view of the present invention.
**Fig. 3** is a side view of the present invention.
**Fig. 4** is a schematic view illustrating the operation of the present invention.
**Fig. 5** is another schematic view illustrating the operation of the present invention.
**Fig. 6** is a schematic view in accordance with another embodiment of the present invention.
**Fig. 7** is a schematic view illustrating the operation in accordance with another embodiment of the present invention.
**Fig. 8** is a schematic view in accordance with still another embodiment of the present invention.
**Fig. 9** is a perspective view of the combination structure of **Fig. 1** taken from another viewpoint.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

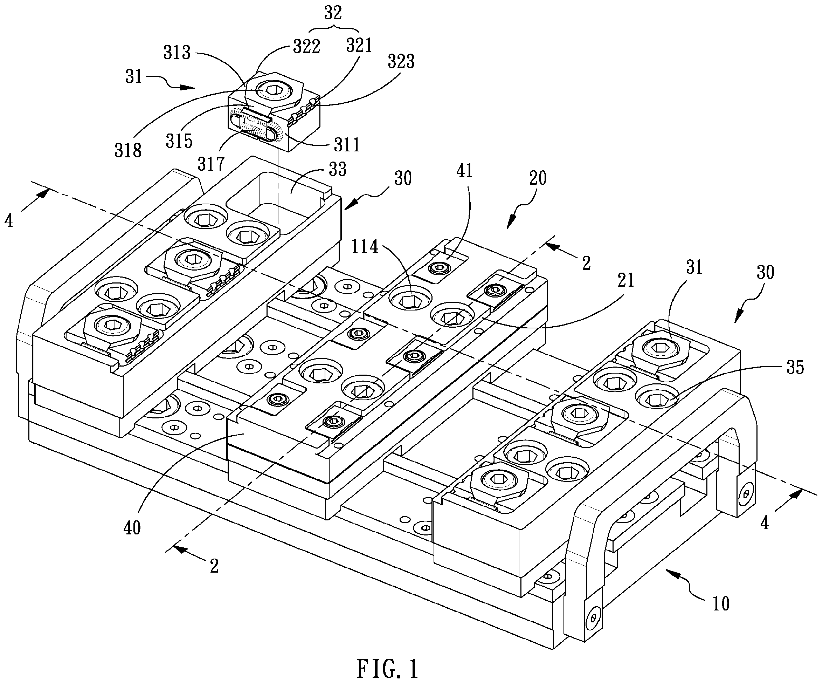

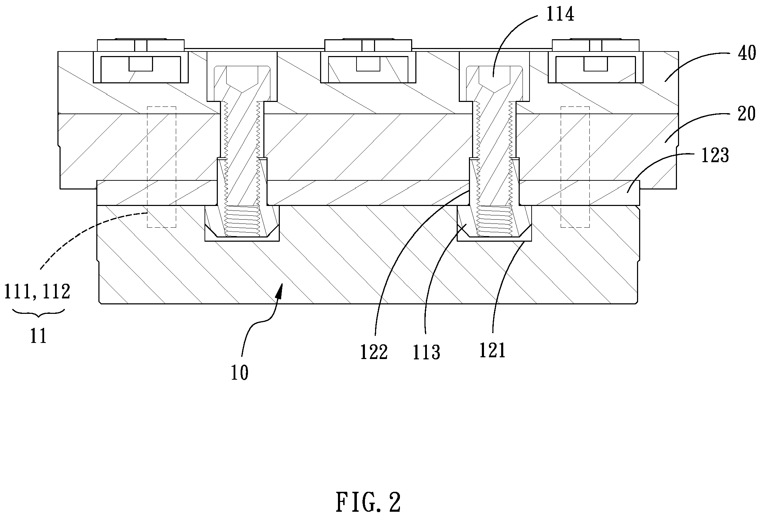

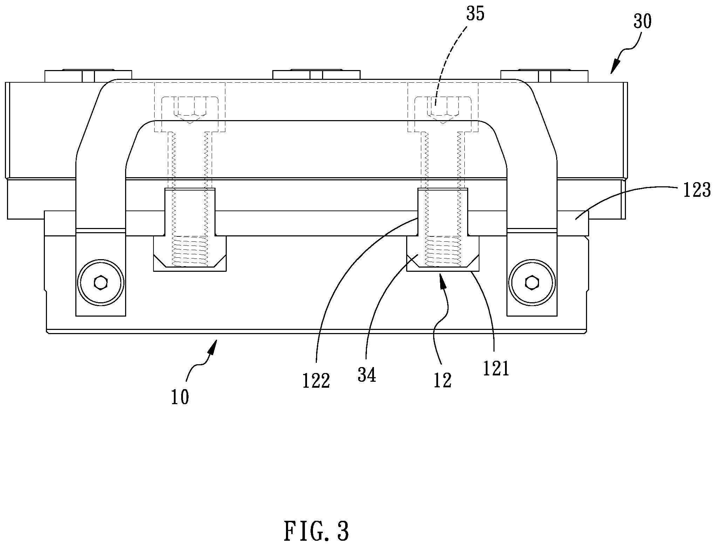

Referring to **Fig. 1** to **Fig. 5**, the present invention provides a modular machine tool processing jig, comprising a base body **10**, at least a clamping positioning seat **20**, and at least a clamping adjusting seat **30.**

The base body **10** comprises at least a positioning device **11** and a movement adjusting device **12.** Therein, the movement adjusting device **12** comprises an adjusting groove **121** disposed on the base body **10.** The adjusting groove **121** comprises an opening **122**, and the width of the opening **122** is smaller than the width of the adjusting groove **121.** For example, the shape of the sectional face of the adjusting groove **121** is allowed to be one of reversed T shape, dovetail groove, and trapezoid shape. In an embodiment, the base body **10** further comprises a reinforcement plate **123** covering the surface of the base body **10**, and the opening **122** is disposed on the reinforcement plate **123** and arranged above the adjusting groove **121.** Therefore, the base body **10** is allowed to be formed of lightweight material, such as aluminum or aluminum alloy, and the reinforcement plate **123** is formed of material with higher strength, such as steel, reinforced steel, or steel alloy. With such configuration, the base body **10** achieves the advantage of lightweight and provides a sufficient strength for meeting processing demand.

The at least one of the clamping positioning seat **20** is fixed on the base body **10** through the positioning device **11.** In an embodiment, the positioning device **11** comprises a plurality of positioning bores **111** preformed on the surface of the base body **10,** and at least a positioning pin **112** disposed on the bottom of the clamping positioning seat **20.** Also, the positioning device **11** comprises at least a fastening block **113** disposed in the adjusting groove **121,** and the clamping positioning seat **20** is fastened with the fastening block **113** through a fastening screw member **114** passing therethrough. Therein, the clamping positioning seat **20** comprises at least a positioning clamping face **21** thereon. With the positioning device **11,** when the clamping positioning seat **20** is installed on the base body **10,** the positioning clamping face **21** is able to be accurately positioned, so as to be applied as the reference face of subsequent processing.

The at least one of the clamping adjusting seat **30** is disposed on the base body **10** through the movement adjusting device **12** and arranged in parallel to the clamping positioning seat **20,** such that the movement adjusting device **12** is used to adjust the interval between the clamping adjusting seat **30** and the clamping positioning seat **20** along an axial direction. In an embodiment, the clamping adjusting seat **30** comprises at least an adjusting slide block **34** disposed in the adjusting groove **121.** The clamping adjusting seat **30** is fastened to the adjusting slide block **34** through an adjusting screw member **35,** such that the clamping adjusting seat **30** is allowed to axially slide or be fixed along the adjusting groove **121.** Therein, the clamping adjusting seat **30** comprises at least a clamping assembly **31** thereon. The clamping assembly **31** comprises at least a clamping face **32,** and the clamping assembly **31** is able to adjust the interval between the clamping face **32** and the positioning clamping face **21,** so as to clamp a to-be-processed workpiece **90.**

Therein, the clamping face **32** comprises a first clamping face **321** and a second clamping face **322** disposed on two lateral sides of the clamping assembly **31,** respectively. The first clamping face **321** comprises a plurality of grooves **323,** and the grooves **323** on the first clamping face **321** comprises at least a horizontal groove and a vertical groove. Further, the clamping adjusting seat **30** concavely comprises a containing groove **333** for receiving the clamping assembly **31.** One side of the containing groove **33** facing the clamping positioning seat **20** has at least one part being open, so that the clamping assembly **31** is selectively switchable for the first clamping face **321** or the second clamping face **322** to face the positioning clamping face **21.**

In an embodiment, the clamping assembly **31** comprises a first clamping block **311,** a second clamping block **313,** an adjusting member **315,** an elastic member **317,** and a clamping screw member **318.**

The first clamping block **311** comprises the first clamping face **321** on one side and a first slope **312** on another side.

The second clamping block **313** comprises the second clamping face **322** on one side and a second slope **314** on another side.

The adjusting member **315** is disposed between the first clamping block **311** and the second clamping block **313**, and comprises two adjusting slopes **316** corresponding to the first slope **312** and the second slope **314**, respectively.

The elastic member **317** is disposed between the first clamping block **311** and the second clamping block **313**, and elastically forces the first clamping block **311** and the second clamping block **313** to abut against each other in general.

The clamping screw member **318** passes through the adjusting member **315** and has one end fastened to the clamping adjusting seat **30.**

With the foregoing configuration, operation of the present invention will be illustrated below.

Referring to **Fig. 1** to **Fig. 3****,** in the embodiment, a rough processing of the to-be-processed workpiece **90** is taken as an example for illustration. Therein, the clamping positioning seat **20** further comprises a rough process positioning member **40,** which is movably fastened on the clamping positioning seat **20,** with the positioning clamping face **21** disposed on at least one side of the rough process positioning member **40.** Also, the rough process positioning member **40** comprises at least a jaw member **41** having at least one portion protruding on the surface of the positioning clamping face **21.**

In the present invention, the arrangement of the clamping positioning seat **20** and the clamping adjusting seat **30** is movably adjusted according to the size of the to-be-processed workpiece **90.** For example, in the embodiment, one clamping positioning seat **20** and two clamping adjusting seats **30** are provided, and the clamping positioning seat **20** is disposed between the two clamping adjusting seats **30.** In other embodiments, for a to-be-processed workpiece **90** having a larger size, one clamping positioning seat **20** and one clamping adjusting seat **30** are provided and disposed on the base body **10** in adjacent to two sides thereof, such that a larger containing space is formed between the clamping positioning seat **20** and the clamping adjusting seat **30.**

Further, the user is allowed to loosen the adjusting screw member **35,** so as to loosen the adjusting slide block **34** in the adjusting groove **121** to become slidable, whereby the user is able to efficiently adjust the interval between the clamping positioning seat **20** and the clamping adjusting seat **30** according to different sizes of to-be-processed workpieces **90.** After the interval adjustment, the user only needs to rotate the adjusting screw member **35** again to force the adjusting block **34** and the adjusting groove **121** to abut against each other, such that the clamping adjusting seat **30** is allowed to be stably fixed to the base body **10.**

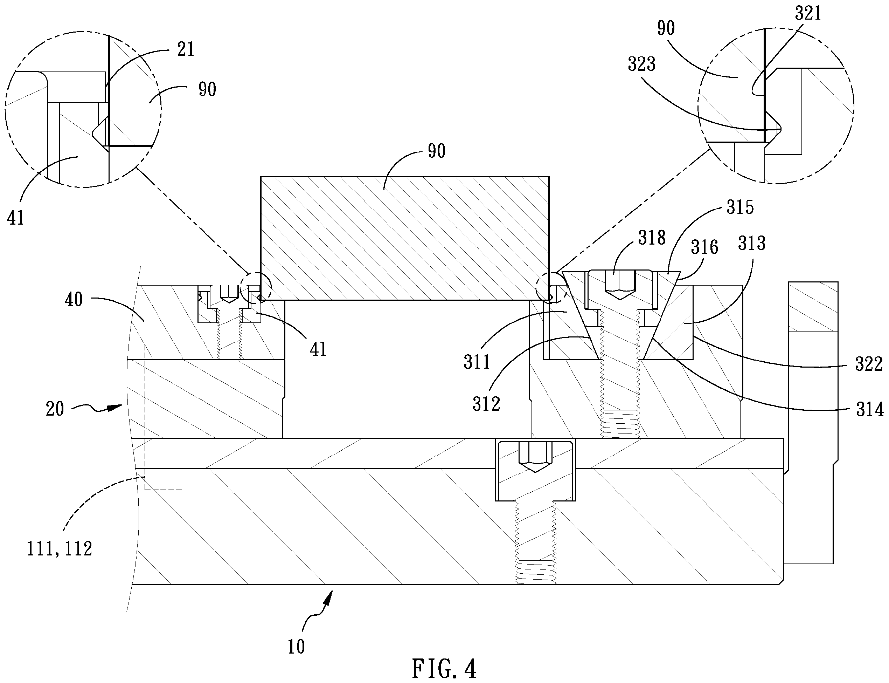

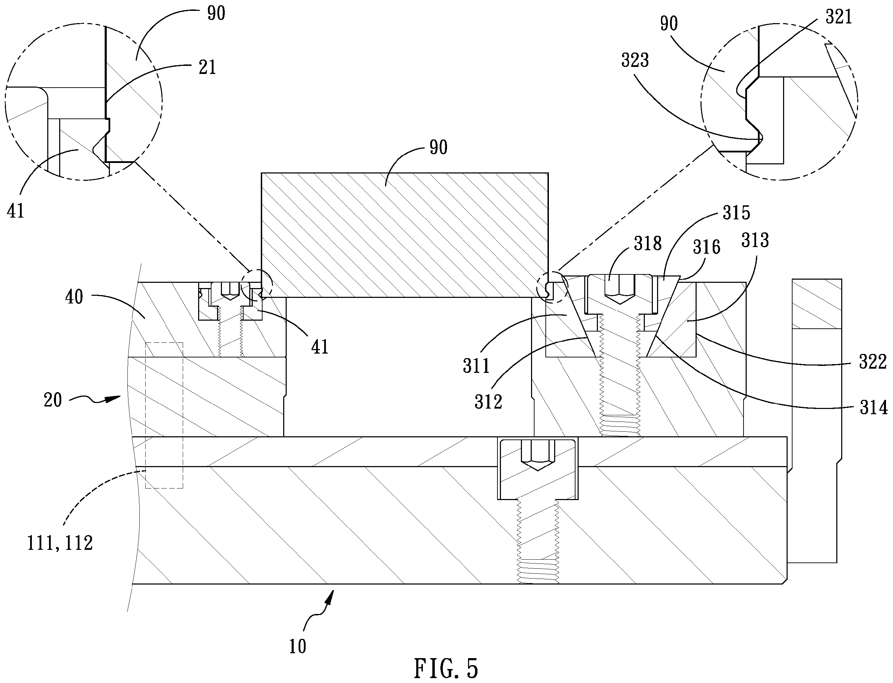

Referring to **Fig. 4****,** the to-be-processed workpiece **90** is placed between the positioning face **21** and the first clamping face **321**. When the user rotates the clamping screw member **318** of the clamping assembly **31** to be tightened, the adjusting member **315** is driven to abut against the first clamping block **311** and the second clamping block **313**; meanwhile with the operation of the adjusting slope **316**, the first slope **312,** and the second slope **314**, the first clamping block **311** and the second clamping block **313** move toward the lateral side. At the same time, the first clamping face **321** of the first clamping block **311** pushes the to-be-processed workpiece **90** toward the positioning clamping face **21**, until the to-be-processed workpiece **90** is stably clamped and fixed by the positioning clamping face **21** and the first clamping face **321** (as shown by **Fig. 5****).**

Therein, during the rough processing, due to a large feed amount and a strong cutting force, the clamping stability of the to-be-processed workpiece **90** has to be assured. With the jaw member **41** of the present invention, when the to-be-processed workpiece **90** is clamped to tightly abut against the positioning clamping face **21**, the jaw member **41** protruding on the surface of the clamping face **21** is embedded and engaged on the surface of the to-be-processed workpiece **90**, providing a strong clamping fixing force. Similarly, the groove **323** of the first clamping face **321** is also embedded and engaged on the surface of the to-be-processed workpiece **90**. Also, due to the horizontal groove and the vertical groove, the grooves **323** are capable of resisting the processing force from different directions. As for the engagement marks left on the surface of the to-be-processed workpiece **90**, those marks will be removed in the subsequent fine cutting or surface processing without causing any influence.

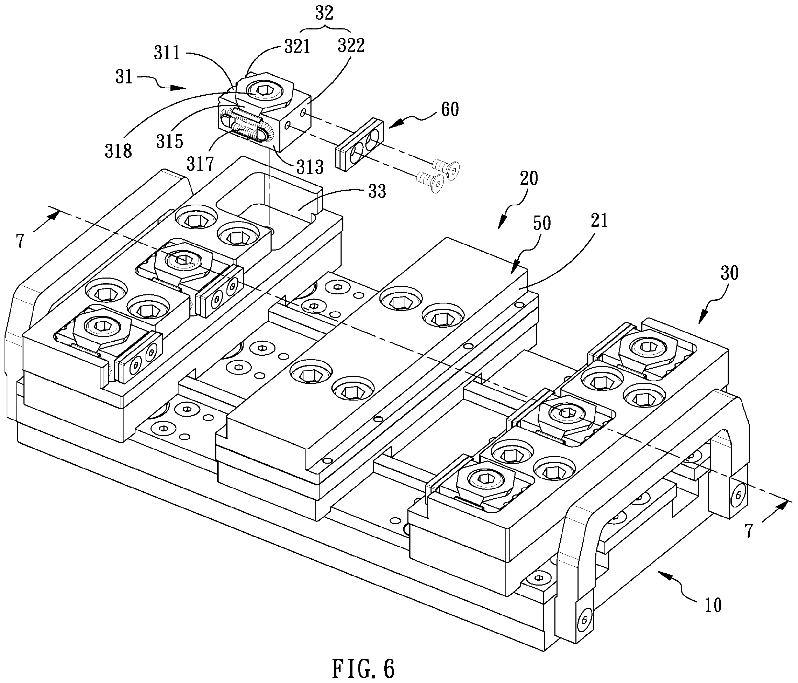

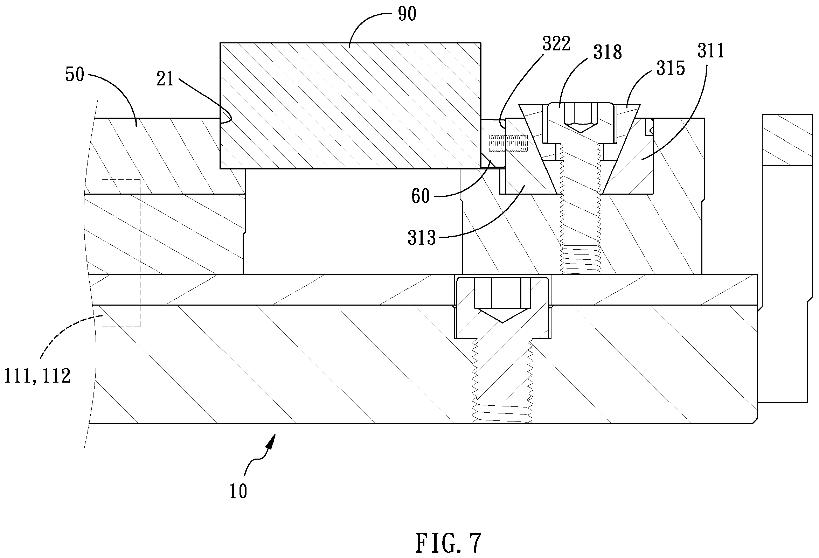

Referring to **Fig. 6** and **Fig. 7**, in another embodiment, a fine processing of the to-be-processed workpiece **90** is taken as an example for illustration. Therein, the clamping positioning seat **20** further comprises a fine process positioning member **50**, which is movably fastened on the clamping positioning seat **20**, with the positioning clamping face **21** disposed on a side of the fine process positioning member **50**. Meanwhile, the second clamping face **322** of the clamping assembly **31** is arranged to face the positioning clamping face **21**. Due to a small feed amount and a weaker cutting force, and the need to avoid marks and flaws left on the surface during the clamping process, the second clamping face **322** and the positioning clamping face **21** are formed into a smooth surface, so as to prevent the occurrence of marks and flaws during the clamping and processing operation. Also, the clamping adjusting seat **30** further comprises a fine process clamping member **60**, which is movably installed on the second clamping face **322**. The fine process clamping member **60** is formed of soft materials, such as metal, rubber, or plastic material having a lower hardness, so as to further enhance the protection upon the to-be-processed workpiece **90**, thereby effectively preventing the surface of the to-be-processed workpiece **90** from having marks thereon due to clamping.

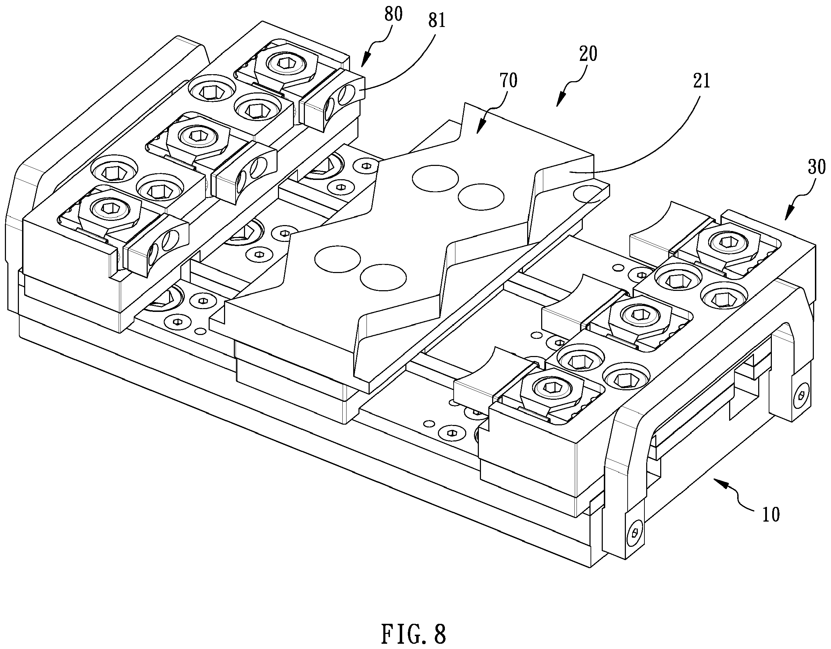

Referring to **Fig. 8**, in another embodiment, the clamping positioning seat **20** further comprises a shaped positioning member **70** movably fastened on the clamping positioning seat **20**, with the positioning clamping face **21** disposed on a side of the shaped positioning member **70**. The shape of the positioning clamping face **21** of the shaped positioning member **70** is allowed to be formed according to the outer profile of the to-be-processed workpiece **90**. Therein, the clamping adjusting seat **30** further comprises a shaped clamping member **80** movably installed on the second clamping face **322**, and the shaped clamping member **80** comprises a shaped clamping face **81**. The shape of the shaped clamping face **81** is allowed to be formed according to the outer profile of the to-be-processed workpiece **90**. When the outer profile of the to-be-processed workpiece **90** is a relatively complicated shape or a shape which is not easily fixed, the present invention achieves a better clamping effect. Also, except the shaped positioning member **70** and the shaped clamping member **80**, most of the components are able to be recycled or shared for different workpieces, thereby greatly reducing the production cost and waste of resources.

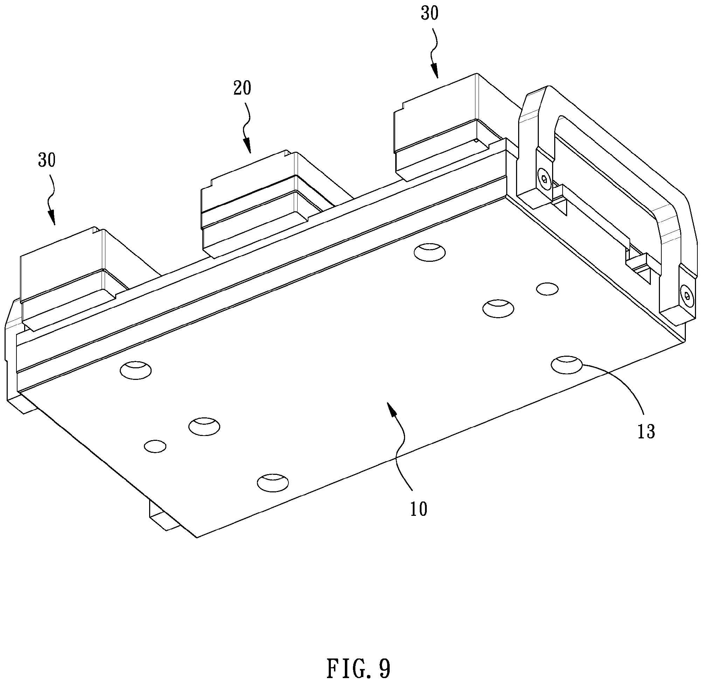

In addition, referring to **Fig. 9**, the base body **10** comprises a zero-point positioning device **13**, which is allowed to be at least a pin bore or at least a pin disposed on the bottom of the base body **10**, while relative fastening devices are allowed to be disposed at the corresponding positions of the machine. Therefore, whether the present invention is disposed on the machine manually or through a mechanical arm, the zero-point positioning device **13** is applied to efficiently and accurately installed the present invention and the to-be-processed workpiece **90** on the predetermined position, greatly reducing the time demand for subsequent zero-setting correction and tool calibration.

With such configuration, the present invention achieves following advantages.

With the base body **10**, the clamping positioning seat **20**, and the clamping adjusting seat **30**, the present invention is able to effectively adjust the appropriate interval for clamping differently sized to-be-processed workpieces **90**, so that the present invention is applicable to various to-be-processed workpieces **90**, thereby improving the issue of specific processing jigs unable to be shared, the production cost rising, and the waste of resources.

With the clamping positioning seat **20** and the positioning device **11**, the present invention easily and accurately positions the positioning clamping face **21**. When the to-be-processed workpiece **90** is clamped and fixed, its lateral side tightly abuts against the positioning clamping face **21**, providing a reference face for subsequent processing, thereby greatly reducing the time needed for subsequent operations, such as zero-setting correction and tool calibration.

The clamping positioning seat **20** and the clamping adjusting seat **30** are allowed to incorporate different modular components, such that the present invention fulfills different demands of rough processing, fine processing, and shaped processing operations.

Most of the components in the present invention are able to be recycled or shared for different workpieces, except the shaped positioning member **70** and the shaped clamping member **80**, so that the production cost and waste of resources are greatly reduced.

Although particular embodiments of the invention have been described in detail for purposes of illustration, various modifications and enhancements may be made without departing from the scope of the invention. Accordingly, the invention is not to be limited except as by the appended claims.

## Claims

1. A modular machine tool processing jig, **characterized in**:
a base body (10) comprising at least a positioning device (11) and a movement adjusting device (12);
at least a clamping positioning seat (20) fixed on the base body (10) through the positioning device (11), the clamping positioning seat (20) comprising at least a positioning clamping face (21); and
at least a clamping adjusting seat (30) disposed on the base body (10) through the movement adjusting device (12), the movement adjusting device (12) adjusting an interval between the clamping adjusting seat (30) and the clamping positioning seat (20) along an axial direction, wherein the clamping adjusting seat (30) comprises at least a clamping assembly (31) disposed thereon, the clamping assembly (31) comprises at least a clamping face (32), and the clamping assembly (31) adjusts an interval between the clamping face (32) and the positioning clamping face (21) to clamp a to-be-processed workpiece (90).

2. The modular machine tool processing jig of claim 1, **characterized in that** the movement adjusting device (12) comprises an adjusting groove (121) disposed on the base body (10); the adjusting groove (121) comprises an opening (122); a width of the opening (122) is smaller than a width of the adjusting groove (121).

3. The modular machine tool processing jig of claim 2, **characterized in that** the adjusting groove (121) has a sectional face which is formed in at least one of reversed T shape, dovetail groove, and trapezoid shape.

4. The modular machine tool processing jig of claim 2, **characterized in that** the base body (10) further comprises a reinforcement plate (123) covering a surface of the base body (10), and the opening (122) is disposed on the reinforcement plate (123) and arranged above the adjusting groove (121).

5. The modular machine tool processing jig of claim 1, **characterized in that** the positioning device (11) comprises a plurality of positioning bores (111) preformed on a surface of the base body (10), and at least a positioning pin (112) disposed on a bottom of the clamping positioning seat (20).

6. The modular machine tool processing jig of claim 2, **characterized in that** the positioning device (11) comprises at least a fastening block (113) disposed in the adjusting groove (121), and the clamping positioning seat (20) and the fastening block (113) are fastened through a fastening screw member (114).

7. The modular machine tool processing jig of claim 2, **characterized in that** the clamping adjusting seat (30) comprises at least an adjusting slide block (34) disposed in the adjusting groove (121); the clamping adjusting seat (30) and the adjusting slide block (34) are fastened through an adjusting screw member (35), such that the clamping adjusting seat (30) axially slides or is fixed along the adjusting groove (121).

8. The modular machine tool processing jig of claim 1, **characterized in that** the clamping face (32) comprises a first clamping face (321) and a second clamping face (322) disposed on two lateral sides of the clamping assembly (31), respectively; the first clamping face (321) comprises a plurality of grooves (323) disposed on a surface thereof; the clamping assembly (31) is selectively switchable for the first clamping face (321) or the second clamping face (322) to face the positioning clamping face (21).

9. The modular machine tool processing jig of claim 8, **characterized in that** the clamping assembly (31) comprises:
a first clamping block (311) comprising the first clamping face (321) on one side thereof and a first slope (312) on another side thereof;
a second clamping block (313) comprising the second clamping face (322) on one side thereof and a second slope face (314) on another side thereof;
an adjusting member (315) disposed between the first clamping block (311) and the second clamping block (313), and comprising two adjusting slopes (316) disposed corresponding to the first slope (312) and the second slope (314);
an elastic member (317) disposed between the first clamping block (311) and the second clamping block (313), the elastic member (317) elastically forcing the first clamping block (311) and the second clamping block (313) to abut against each other in general; and
a clamping screw member (318) passing through the adjusting member (315) and comprising one end fastened to the clamping adjusting seat (30).

10. The modular machine tool processing jig of claim 8, **characterized in that** the clamping positioning seat (20) further comprises a rough process positioning member (40) movably fastened on the clamping positioning seat (20), with the positioning clamping face (21) disposed on a lateral side of the rough process positioning member (40); the rough process positioning member (40) comprises at least a jaw member (41) having at least a portion protruding on a surface of the positioning clamping face (21).

11. The modular machine tool processing jig of claim 10, **characterized in that** the grooves (323) on the surface of the first clamping face (321) comprise at least a horizontal groove and a vertical groove.

12. The modular machine tool processing jig of claim 8, **characterized in that** the clamping positioning seat (20) further comprises a fine process positioning member (50) movably fastened on the clamping positioning seat (20), with the positioning clamping face (21) disposed on a lateral side of the fine process positioning member (50).

13. The modular machine tool processing jig of claim 12, **characterized in that** the clamping adjusting seat (30) further comprises a fine process clamping member (60) movably installed on the second clamping face (322).

14. The modular machine tool processing jig of claim 8, **characterized in that** the clamping positioning seat (20) further comprises a shaped positioning member (70) movably fastened on the clamping positioning seat (20), with the positioning clamping face (21) disposed on a lateral side of the shaped positioning member (70); the positioning clamping face (21) of the shaped positioning member (70) is shaped according to an outer profile of the to-be-processed workpiece (90).

15. The modular machine tool processing jig of claim 14, **characterized in that** the clamping adjusting seat (30) comprises a shaped clamping member (80) movably installed on the second clamping face (322); the shaped clamping member (80) comprises a shaped clamping face (81); the shaped clamping face (81) is shaped according to the outer profile of the to-be-processed workpiece (90).

16. The modular machine tool processing jig of claim 1, **characterized in that** the base body (10) comprises a zero-point positioning device (13); the zero-point positioning device (13) is at least a pin bore or at least a pin disposed on a bottom of the base body (10).
